# FASCICULE DE BREVET EUROPEEN

(11) **EP 1 957 305 B1**
(45) Date de publication et mention de la délivrance du brevet: **02.11.2011**
(21) Numéro de dépôt: 06842086.8
(22) Date de dépôt: 04.12.2006
(51) Int. Cl.: B60K 11/04

(54) **SYSTEME DE FIXATION D'UN MODULE DE REFROIDISSEMENT ET VEHICULE MUNI D'UN TEL SYSTEME**
BEFESTIGUNGSSYSTEM FÜR EIN KÜHLMODUL UND DAMIT AUSGESTATTETES FAHRZEUG
FASTENING SYSTEM FOR A COOLING MODULE AND A VEHICLE PROVIDED THEREWITH

(30) Priorité: 09.12.2005 FR 0553805
(43) Date de publication de la demande: 20.08.2008
(73) Titulaire: Peugeot Citroën Automobiles, 78140 Vélizy-Villacoublay (FR)
(72) Inventeur: BERNAUDIN, Matthieu, F-75015 Paris (FR); AUDRY, Clarisse, F-92350 Le Plessis Robinson (FR)
(86) Numéro de dépôt international: PCT/FR2006/051275
(87) Numéro de publication internationale: WO 2007/066035

(56) Documents cités:
- DE-A1- 3 446 752
- DE-B- 1 188 456
- FR-A- 2 809 073

## Description

L'invention se rapporte à un système de fixation d'un module de refroidissement et à un véhicule muni d'un tel système.

L'invention concerne plus particulièrement un système de fixation comprenant au moins un moyen faisant support, un moyen de guidage et un moyen de liaison interposé entre lesdits moyens de support et de guidage, rendant apte le déplacement du module de refroidissement en cas de choc.

Il est connu de monter démontable un radiateur fixé à un support de la structure d'un véhicule automobile. Le brevet US6,412,581 divulgue un tel principe, selon lequel le radiateur est monté articulé en rotation vers l'arrière lors d'un choc frontal. Pour cela, la partie supérieure du module de refroidissement est montée intégralement démontable du support lors d'un effort orienté de l'avant vers l'arrière du véhicule, tandis que la partie inférieure est montée solidaire d'une traverse de la structure du véhicule par l'intermédiaire d'un élément en caoutchouc déformable rendant apte le basculement du radiateur selon un axe sensiblement orienté transversalement au véhicule.

Lors d'un choc à faible vitesse, par exemple un choc piéton, l'effort engendré est ainsi suffisant pour désolidariser la partie supérieure du radiateur et permettre ainsi son basculement vers l'arrière. La partie inférieure du radiateur reste située approximativement au même emplacement longitudinal qu'avant le choc.

Il est également connu de DE3446752-A1 qui indique l'état de la technique antérieure décrit un système de fixation d'un refroidisseur comprenant un moyen de support et un moyen de liaison assurant un déplacement du refroidisseur selon une rotation en sa partie supérieure autour d'un axe transveral et un débattement vers l'arrière en sa partie inférieure via des bielles prévues à cet effet.

La demanderesse a relevé comme inconvénient majeur qu'un tel principe est fonctionnellement limité au cas où l'effort du choc est orienté parallèlement au chemin définit par la lumière pratiquée dans chaque support supérieur. En effet,

lors d'un choc frontal incliné par rapport à un axe longitudinal du véhicule, le radiateur ne bascule pas mais tend à se vriller. Les efforts qu'il subit sont tels qu'il a même été relevé des cas de détériorations irréversibles.

La demanderesse a également relevé qu'un tel principe n'est pas applicable à tout type de véhicule, notamment au véhicule dont l'architecture prévoit une poutre transversale située verticalement sensiblement au droit de la partie médiane du radiateur, qui soit avantageusement destinée à absorber par déformation l'énergie d'un choc frontal. En effet, malgré le basculement du radiateur, une telle architecture ne donne pas suffisamment de liberté à la déformation de la poutre avant que cette dernière n'entre en contact avec le radiateur, de sorte qu'une détérioration du radiateur est quasi inéluctable dans une telle application. Il pourrait alors être envisagé d'éloigner la poutre du radiateur de sorte que la poutre ne rentre pas en contact avec le radiateur. La demanderesse a constaté qu'une telle solution a pour inconvénient d'allonger de manière très significative la longueur du porte à faux avant du véhicule.

Un but de la présente invention est de pallier tout ou partie des inconvénients de l'art antérieur relevés ci-dessus.

La présente invention a trait à un système de fixation d'un module de refroidissement de véhicule automobile comprenant au moins un moyen faisant support, un moyen de guidage et un moyen de liaison interposé entre lesdits moyens de support et de guidage, rendant apte le déplacement du module de refroidissement en cas de choc.

A cette fin, le système de fixation selon l'invention, par ailleurs conforme à la définition générique qu'en donne le préambule ci-dessus, est essentiellement **caractérisé en ce que** chaque moyen de liaison est monté articulé en rotation sur ledit moyen faisant support autour d'un axe A-A sensiblement verticale au véhicule.

Par ailleurs, le système de l'invention peut comporter l'une ou plusieurs des caractéristiques suivantes :
- chaque moyen de liaison comprend à une extrémité opposée audit moyen de support, un doigt coopérant avec ledit moyen de guidage et en ce que chaque moyen de guidage comprenant au moins une rainure au travers de laquelle le doigt est apte à coulisser,
- chaque moyen de support comprend au moins une butée au déplacement du module de refroidissement vers la position finale
- la butée comprend au moins une cloison faisant saillie hors dudit moyen faisant support, la cloison étant apte à coopérer avec tout ou partie dudit moyen de liaison
- chaque moyen de guidage comprenant au moins un ergot coopérant avec ledit moyen de liaison lorsque le module de refroidissement est en position initiale, l'ergot étant déformable sous un effort lié à un choc de sorte à permettre le déplacement par coulissement dudit moyen de liaison au travers dudit moyen de guidage,
- chaque moyen de liaison comprend un bras, une extrémité du bras comprend un pallier monté en rotation sur ledit moyen faisant support autour de l'axe A-A.

La présente invention concerne également un véhicule automobile comprenant au moins un module de refroidissement monté sur une structure du véhicule par l'intermédiaire d'au moins un système de fixation comportant l'une quelconque des caractéristiques précédentes, chaque module de refroidissement comprenant des faces avant et arrière reliées entre elles par au moins un bord, le véhicule étant **caractérisé en ce qu'**au moins un moyen faisant support est monté solidaire de la structure du véhicule, au moins un moyen de guidage est monté solidaire du module de refroidissement, chaque moyen faisant support étant relié à chaque moyen de guidage par l'intermédiaire d'un bras dudit moyen de liaison.

Le véhicule comportant l'une quelconque des caractéristiques précédentes se caractérise en ce qu'au moins une rainure de guidage est ménagée sur le bord de chaque module de refroidissement.

D'autres particularités et avantages apparaîtront à la lecture de la description ci-après faite en référence aux figures dans lesquelles :
- la figure 1 est, selon une coupe horizontale, une représentation schématique d'une vue de dessus partielle d'un module de refroidissement relié à la structure d'un véhicule automobile par le système de fixation de l'invention, ledit module de refroidissement étant représenté en position initiale de montage sur un moyen de support,
- la figure 2 est une représentation schématique du module de refroidissement de la figure 1, ledit module étant représenté en position finale de montage sur le moyen de support après un choc à faible vitesse,
- la figure 3 est un agrandissement d'une partie du système de fixation du module de refroidissement en position initiale de la figure 1.

Dans ce qui suit, les orientations utilisées sont les orientations habituelles d'un véhicule automobile et les termes «avant », « arrière » s'entendent par rapport à la position d'un conducteur et du sens de marche normal du véhicule.

Le refroidissement d'un moteur à combustion interne pour véhicule automobile est traditionnellement obtenu par une circulation d'eau au travers d'un circuit d'écoulement d'eau dans lequel se trouve disposé un échangeur thermique.

L'échangeur thermique, parfois nommé radiateur, est porté par un carter sur lequel peut également être agencé un moto ventilateur assurant un échange thermique forcé. Un module de refroidissement comprenant notamment au moins un radiateur, un carter et un moto-ventilateur est donc monté en face avant d'un véhicule automobile, de préférence entre un moteur et un passage d'air ménagé sur une calandre non représentée.

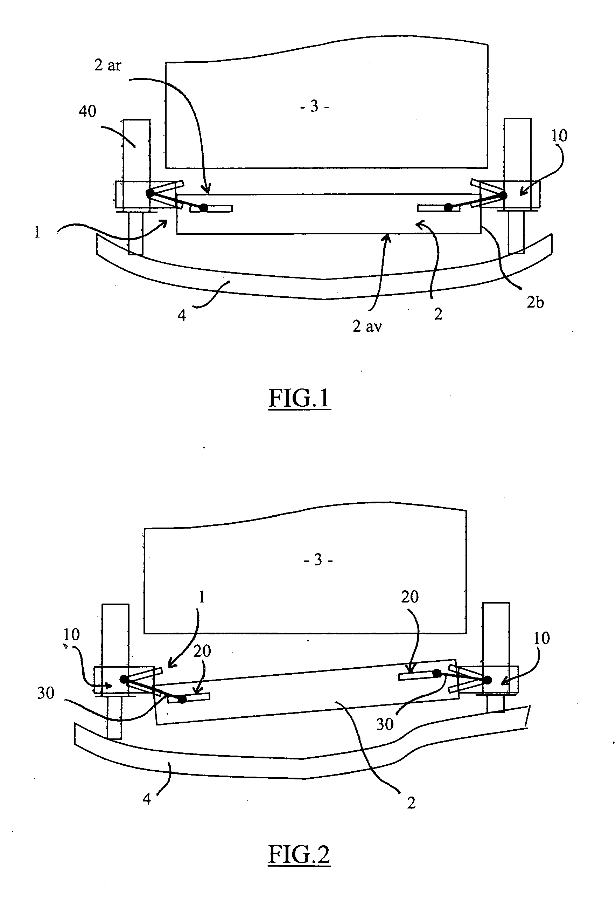

Un tel module de refroidissement 2 est illustré sur les FIGS. 1 et 2 selon un agencement entre le moteur 3 et une poutre 4 qui s'étend de manière sensiblement transversale au véhicule.

La poutre 4 est reliée à des longerons disposés de chaque côté du moteur. Deux éléments d'absorption d'énergie, qui sont aptes à se déformer lors d'un choc, sont entretoisés entre les longerons et la poutre 4.

Le module de refroidissement 2 est monté sur la structure du véhicule, laquelle est notamment composée des longerons précédemment cités, par l'intermédiaire d'un système de fixation 1 particulier.

Le module de refroidissement 2 comprend, dans un mode de réalisation traditionnel, un cadre qui est sensiblement de forme rectangulaire, de sorte à comprendre des coins supérieurs gauche et droit, et des coins inférieurs gauche et droit. En fait, le module de refroidissement 2 est défini selon des faces avant et arrière reliées entre-elles par au moins des flancs horizontaux et verticaux. Le module de refroidissement est, en position initale de montage sur la structure, disposé de manière sensiblement verticale, de sorte que les faces avant et arrière s'étendent transversalement au véhicule. Les flancs horizontaux s'étendent selon deux niveaux, l'un en haut, l'autre plus bas, tandis que les flancs verticaux s'étendent à gauche et à droite d'un plan médian vertical au véhicule.

Le module de refroidissement 2 est lié à la structure du véhicule par un moyen faisant support 10.

Ledit moyen faisant support 10 comprend par exemple au moins une plaque de tôlerie, montée solidaire de la structure du véhicule, par exemple par une opération de soudage réalisée durant le ferrage du véhicule. De préférence, quatre plaques 10 sont verticalement disposées au droit des coins du module de refroidissement. Ainsi, les faces avant et arrière du module de refroidissement 2 s'étendent de manière sensiblement verticale, dans un plan qui est sensiblement perpendiculaire à l'axe longitudinal du véhicule. Dans l'illustration faite en FIG.1, la face avant s'étend transversalement au droit de tout ou partie des éléments d'absorption de l'énergie.

Le module de refroidissement 2 est fixé à au moins une plaque 10, par l'intermédiaire d'un moyen de liaison 30 qui comprend notamment une tige 32 munie de deux extrémités. Une des extrémités de la tige 32 est articulée autour d'un axe A-A de la plaque 10, qui s'étend de manière sensiblement verticale et perpendiculaire à l'axe longitudinale du véhicule. L'amplitude de déplacement angulaire de la tige 32 sur la plaque 10 est défini par au moins une butée 11 solidaire de la plaque 10. La butée 11 s'étend de préférence sensiblement en saillie verticalement hors de la plaque 10. Chaque plaque 10 comprend deux butées 11, l'une 11a comprenant par exemple un organe de maintien (non représenté) de la tige 32 dans sa position initiale, ledit organe de maintien étant par exemple un clip, l'autre 11b étant destinée à limiter le déplacement angulaire de la tige 32 sur la plaque 10 lors d'un choc.

Pour réaliser cette articulation, la plaque 10 comprend un axe dirigé verticalement, autour duquel est monté pivotant la tige 32. Dans un autre mode de réalisation, la tige 32 comprend à l'une 30b de ces extrémités un axe destiné à être monté en rotation dans un palier de la plaque 10.

L'autre 30a des extrémités de la tige 32 est montée mobile en translation le long d'un chemin défini par un moyen de guidage 20. Pour cela, le module de refroidissement 2 comprend un moyen de guidage 20 qui est de préférence confondu dans le cadre du module de refroidissement 2. En fait, une rainure 21 ménagée dans le cadre du module de refroidissement est destinée à guider linéairement l'extrémité de la tige 32. Pour cela, l'autre extrémité 30a de la tige 32 comprend un axe 31 qui s'étend de préférence perpendiculairement à la tige 32. Par conséquent, la périphérie extérieure de l'axe 31 solidaire de la tige 32 est guidée en translation au travers des bords de la rainure 21.

Chaque axe 31 ou chaque palier des extrémités 30a ou 30b de la tige 32 est soit monté solidaire en rotation sur la tige 32, soit monté libre en rotation autour d'un axe s'étendant le long de la tige 32.

L'axe 31 est donc apte à se déplacer d'une position initiale à une position finale. En position initiale, l'axe 31 coopère avec au moins un ergot 22 compris dans ledit moyen de guidage 20. En effet, au moins l'un des bords de la rainure 21 dudit moyen de guidage comprend un ergot 22 faisant saillie hors du bord de la rainure, en direction de l'autre bord. L'ergot 22 est de préférence destiné à se déformer ou se rompre, sous l'effet d'un effort donné par l'axe 31. L'ergot est de préférence une pièce rapportée dans la rainure 21 de sorte qu'en cas de sa déformation, il peut être procédé à la réparabilité à faible coût du module de refroidissement, cas seul l'ergot est à remplacer.

Bien entendu, un autre mode de réalisation comprenant deux ergots disposés sur les bords de la rainure 21, au droit l'un de l'autre, est envisageable.

Dans un mode de réalisation préférée, le flanc supérieur du module de refroidissement est relié à la structure du véhicule par un système de fixation 1 comprenant deux moyens de support 10, deux moyens de guidage 20 et deux moyens de liaison 30. Ainsi, les systèmes de fixation sont entretroisés aux niveaux des coins supérieurs gauche et droit. Le flanc inférieur du module de refroidissement est, quant à lui, relié à une poutre transversale non représentée par l'intermédiaire soit de plots en caoutchouc (non représentés), soit d'un système de fixation comprenant deux moyens de support 10, deux moyens de guidage 20 et deux moyens de liaison 30.

Afin de mieux comprendre l'invention, la description ci-après faite détaille le fonctionnement d'une partie du système de fixation 1 lors d'un choc qui tend à déplacer tout ou partie de la poutre 4 en direction du module de refroidissement 2, jusqu'à venir en appui contre la face avant de ce dernier.

En effet, lors d'un choc, les éléments d'absorption de l'énergie, qui travaille par déformation, rendent apte le déplacement de la poutre 4 vers la face avant du module de refroidissement 2.

Lorsque la poutre 4 vient en appui contre la face avant du module de refroidissement 2, ce dernier se déplace selon les composantes de l'effort donné par la poutre 4. Lorsque la résultante entre les composantes longitudinale et transversale de l'effort est supérieure à l'effort de maintien de la tige 32 en position initiale, c'est-à-dire à l'effort de maintien appliqué par l'ergot 22 sur l'axe 31, alors l'ergot se rompt. En effet, l'ergot 22 de maintien de l'axe 31 en position initiale est, selon le mode de réalisation préféré, apte à se rompre afin de laisser l'axe 31 se déplacer vers sa position finale. Pour cela, l'ergot 22 est conformé de manière à se rompre sous un effort prédéterminé.

L'axe 31 devient ainsi libre de se déplacer le long du chemin défini par la rainure 21 dudit moyen de guidage 20 de la tige.

Le déplacement de l'axe 31 s'effectue en concomitance d'un mouvement de rotation de la tige 32 autour de l'axe A-A de la plaque 10. Par conséquent, le déplacement du module de refroidissement 2 engendre une simultanéité des mouvements de déplacement des extrémités de la tige 32, de sorte qu'il soit créé une articulation de l'extrémité 30b de la tige 32 en rotation autour de l'axe A-A de la plaque 10 et une articulation de l'extrémité 30a de la tige 32 le long de la rainure 21 qui s'étend transversalement au module de refroidissement.

La description faite ci-dessus détaille le fonctionnement d'une partie du système de fixation, c'est-à-dire un système de fixation muni d'un moyen faisant support 10, d'un moyen de guidage 20 et d'un moyen de liaison 30.

Dans le mode de réalisation préférée, les flancs supérieur et inférieur du module de refroidissement comprennent des rainures 21 de guidage, qui sont reliées à la structure du véhicule, munie de plaques 10, par des tiges 32 de liaison. Ainsi, le moyen faisant support 10 comprend de préférence deux plaques supérieures qui s'étendent dans un premier plan horizontal et deux plaques inférieures qui s'étendent dans un second plan horizontal au véhicule, lesdits premier et second plans horizontaux étant situés l'un au dessus de l'autre. Par conséquent, le déplacement du module de refroidissement 2, lors d'un choc, s'effectue de manière telle que la face avant du module 2, qui s'étend selon un plan sensiblement vertical en position initiale de montage, tende à s'étendre de manière sensiblement verticale selon un plan, en position finale de montage sur la structure du véhicule. Pour cela, chaque extrémité 30b des tiges 32 liant le module de refroidissement à la structure du véhicule, s'articulent en rotation sur les plaques 10 selon des axes A-A sensiblement verticaux.

Selon la variante de réalisation, seul le flanc supérieur du module de refroidissement comprend des rainures 21 de guidage, qui sont reliées à la structure du véhicule, munie de plaques 10, par des tiges 32 de liaison. Le flanc inférieur du module de refroidissement comprend, quant à lui, au moins un plot en caoutchouc (non représenté) faisant pallier à un pion (non représenté) du module de refroidissement s'étendant de manière sensiblement verticale. Par conséquent, le déplacement du module de refroidissement 2, lors d'un choc, s'effectue de manière telle que la face avant du module 2, qui s'étend selon un plan sensiblement verticale en position initiale de montage, tende à s'étendre de manière sensiblement inclinée de l'avant vers l'arrière, en position finale de basculement sur la structure du véhicule. Pour cela, chaque extrémité 30b des tiges 32 liant le flanc supérieur du module de refroidissement à la structure du véhicule, s'articulent en rotation sur les plaques 10 selon des axes A-A verticaux, tandis que chaque pion liant le flanc inférieur du module de refroidissement à la structure du véhicule, s'articule en rotation sur le plot en caoutchouc selon un axe transversal au véhicule.

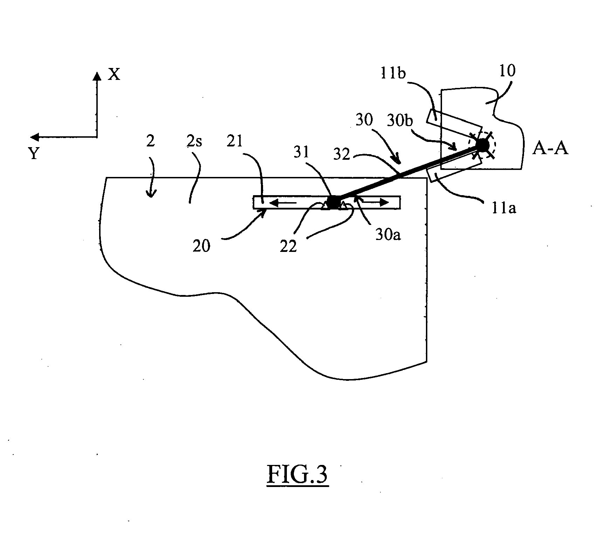

Indépendamment du mode de réalisation, chaque axe 31 est de longueur suffisante pour rester à l'intérieur de la rainure 21 lorsque le module de refroidissement 2 se déplace de sa position initiale à sa position finale de montage sur le véhicule après un choc. Chaque axe 31 est de préférence, disposé sensiblement au milieu du chemin de guidage défini par la rainure 21, comme l'illustre la FIG3, de sorte à rendre apte l'éloignement ou le rapprochement du module de refroidissement par rapport à chaque plaque 10 lors de son déplacement de la position initiale à la position finale de montage après un choc réparabilité.

Ainsi, indépendamment de la direction de l'effort donné par la poutre 4 à la façade avant du module de refroidissement 2 lors d'un choc réparabilité, le système de fixation 1 rend avantageusement apte le mouvement de recul du module de refroidissement afin de ne pas le détériorer.

## Revendications

1. Système de fixation (1) d'un module de refroidissement (2) de véhicule automobile, comprenant au moins un moyen faisant support (10), un moyen de guidage (20) et un moyen de liaison (30) interposé entre lesdits moyens de support et de guidage, rendant apte le déplacement du module de refroidissement (2) en cas de choc, **caractérisé en ce que** :
- chaque moyen de liaison (30) est monté articulé en rotation sur ledit moyen faisant support (10), autour d'un axe (A-A) sensiblement vertical au véhicule,
- chaque moyen de liaison (30) comprenant à une extrémité (30a) opposée audit moyen de support (10), un doigt (31) coopérant avec ledit moyen de guidage (20),
- chaque moyen de guidage (20) comprenant au moins une rainure (21) au travers de laquelle le doigt (31) est apte à coulisser et au moins un ergot (22) coopérant avec ledit moyen de liaison (30) lorsque le module de refroidissement (2) est en position initiale, l'ergot (22) étant déformable sous un effort lié à un choc pour déplacer par coulissement ledit moyen de liaison (30) au travers dudit moyen de guidage (20).

2. Système de fixation selon la revendication 1, **caractérisé en ce que** chaque moyen de support (10) comprend au moins une butée (11) au déplacement du module de refroidissement (2) vers la position finale.

3. Système de fixation selon la revendication 2, **caractérisé en ce que** la butée (11) comprend au moins une cloison faisant saillie hors dudit moyen faisant support (10), la cloison étant apte à coopérer avec tout ou partie dudit moyen de liaison (30).

4. Système de fixation selon l'une quelconque des revendication 1 à 3, **caractérisé en ce que** chaque moyen de liaison (30) comprend un bras (32), une extrémité (30b) du bras (32) comprend un pallier monté en rotation sur ledit moyen faisant support (10) autour de l'axe (A-A).

5. Véhicule automobile comprenant au moins un module de refroidissement (2) monté sur une structure (40) du véhicule par l'intermédiaire d'au moins un système de fixation (1) conforme à l'une quelconque des revendications précédentes, chaque module de refroidissement (2) comprenant des faces avant (2av) et arrière (2ar) reliées entre elles par au moins un bord (2b), **caractérisé en ce qu'**au moins un moyen faisant support (10) est monté solidaire de la structure (40) du véhicule, au moins un moyen de guidage (20) est monté solidaire du module de refroidissement (2), chaque moyen faisant support (10) étant relié à chaque moyen de guidage (20) par l'intermédiaire d'un bras (32) dudit moyen de liaison (30).

6. Véhicule selon la revendication précédente, **caractérisé en ce qu'**au moins une rainure (21) de guidage est ménagée sur le bord (2b) de chaque module de refroidissement (2).

## Claims

1. Fastening system (1) of a cooling module (2) of a motor vehicle, comprising at least one support means (10), a guiding means (20) and a connection means (30) interposed between the said support and guiding means, enabling the displacement of the cooling module (2) in the case of shock, **characterized in that**:
- each connection means (30) is mounted articulatedly in rotation on the said support means (10), about an axis (A-A) substantially vertical to the vehicle,
- each connection means (30) comprising at an end (30a) opposed to the said support means (10), a finger (31) cooperating with the said guiding means (20),
- each guiding means (20) comprising at least one groove (21) through which the finger (31) is able to slide and at least one lug (22) cooperating with the said connection means (30) when the cooling module (2) is in the initial position, the lug (22) being deformable under a force linked to a shock for displacement by sliding of the said connection means (30) through the said guiding means (20).

2. Fastening system according to Claim 1, **characterized in that** each support means (10) comprises at least one stop (11) on the displacement of the cooling module (2) towards the final position.

3. Fastening system according to Claim 2, **characterized in that** the stop (11) comprises at least one partition projecting beyond the said support means (10), the partition being able to cooperate with all or part of the said connection means (30).

4. Fastening system according to any one of Claims 1 to 3, **characterized in that** each connection means (30) comprises an arm (32), an end (30b) of the arm (32) comprises a bearing rotatably mounted on the said support means (10) about the axis (A-A).

5. Motor vehicle comprising at least one cooling module (2) mounted on a structure (40) of the vehicle by means of at least one fastening system (1) according to any one of the preceding claims, each cooling module (2) comprising front (2av) and rear (2ar) faces connected with each other by at least one edge (2b), **characterized in that** at least one support means (10) is mounted integrally with the structure (40) of the vehicle, at least one guiding means (20) is mounted integrally with the cooling module (2), each support means (10) being connected to each guiding means (20) by means of an arm (32) of the said connection means (30) .

6. Vehicle according to the preceding claim, **characterized in that** at least one guide groove (21) is arranged on the edge (2b) of each cooling module (2) .

## Patentansprüche

1. System (1) zum Befestigen eines Kühlmoduls (2) für Kraftfahrzeug, das mindestens ein Stützmittel (10), ein Führungsmittel (20) und ein Verbindungsmittel (30), das zwischen die Stütz- und Führungsmittel eingefügt ist, aufweist und das Kühlmodul (2) in dem Fall eines Aufpralls verlagerungsfähig macht, **dadurch gekennzeichnet, dass**:
- jedes Verbindungsmittel (30) auf das Stützmittel (10) um eine Achse (A-A), die im Wesentlichen zu dem Fahrzeug vertikal ist, in Drehung gelenkig installiert ist,
- jedes Verbindungsmittel (30) ein Ende (30a), das dem Stützmittel (10) entgegen gesetzt ist, einen Finger (31), der mit dem Führungsmittel (20) zusammenwirkt, aufweist,
- jedes Führungsmittel (20) mindestens eine Rille (21) aufweist, durch welche der Finger (31) gleiten kann, und mindestens einen Dorn (22), der mit dem Verbindungsmittel (30) zusammenwirkt, wenn das Kühlmodul (2) in Ausgangsposition ist, wobei der Dorn (22) unter der Einwirkung in Zusammenhang mit einem Aufprall verformbar ist, um das Verbindungsmittel (30) durch das Führungsmittel (20) durch Gleiten zu verlagern.

2. Befestigungssystem nach Anspruch 1, **dadurch gekennzeichnet, dass** jedes Stützmittel (10) mindestens einen Anschlag (11) für das Verlagern des Kühlmoduls (2) zu der Endposition aufweist.

3. Befestigungssystem nach Anspruch 2, **dadurch gekennzeichnet, dass** der Anschlag (11) mindestens eine Wand aufweist, die aus dem Stützmittel (10) herausragt, wobei die Wand mit einem Teil oder dem ganzen Verbindungsmittel (30) zusammenwirken kann.

4. Befestigungssystem nach einem der Ansprüche 1 bis 3, **dadurch gekennzeichnet, dass** jedes Verbindungsmittel (30), einen Arm (32) aufweist, dass ein Ende (30b) des Arms (32) ein Lager aufweist, das auf dem Stützmittel (10) um die Achse (A-A) drehend installiert ist.

5. Kraftfahrzeug, das mindestens ein Kühlmodul (2) aufweist, das auf eine Struktur (40) des Fahrzeugs über mindestens ein Befestigungssystem (1) gemäß einem der vorhergehenden Ansprüche installiert ist, wobei jedes Kühlmodul (2) eine Vorderseite (2av) und eine Rückseite (2ar) aufweist, die mit einander durch mindestens einen Rand (2b) verbunden sind, **dadurch gekennzeichnet, dass** mindestens ein Stützmittel (10) fest mit der Struktur (40) des Fahrzeugs verbunden installiert ist, dass mindestens ein Führungsmittel (20) fest mit dem Kühlmodul (2) verbunden installiert ist, wobei jedes Stützmittel (10) mit jedem Führungsmittel (20) über einen Arm (32) des Verbindungsmittels (30) verbunden ist.

6. Fahrzeug nach dem vorhergehenden Anspruch, **dadurch gekennzeichnet, dass** mindestens eine Führungsrille (21) auf dem Rand (2b) jedes Kühlmoduls (2) eingerichtet ist.
